# EUROPEAN PATENT SPECIFICATION

(11) **EP 1 600 309 B1**
(45) Date of publication and mention of the grant of the patent: **02.04.2008**
(21) Application number: 05076042.0
(22) Date of filing: 04.05.2005
(51) Int. Cl.: B60C 25/01, B60C 17/04

(54) **Tool for the removal of "run flat" type tires**
Werkzeug zur Demontage von Notlaufreifen
Outil de démontage pour pneumatiques adaptés au roulage à plat

(30) Priority: 27.05.2004 IT RE20040062
(43) Date of publication of application: 30.11.2005
(73) Proprietor: CORGHI S.p.A., I-42015 Correggio (Reggio Emilia) (IT)
(72) Inventor: Corghi, Remo, c/o Corghi S.P.A., 42015 Correggio (Reggio Emilia) (IT)
(74) Representative: Corradini, Corrado

(56) References cited:
- EP-A- 1 344 657
- DE-C1- 3 910 807
- US-A- 4 324 283

## Description

The present invention relates to a tool adapted to assist the removal of special type tyres, and especially tyres that permit vehicle travel even where sufficient inflation pressure is not present, or in the case of punctured tyres.

More specifically, the present tool is related to tyre types called RUN FLAT tyres.

As well as having the outer wall or carcass (tubeless type tyres) these tyres comprise a separate elastically deformable internal toroidal ring that is located between the carcass tread and the external peripheral crown when the tyre is mounted.

An example of a run flat tyre is disclosed in document EP 1344657.

The tyre is symmetrical, that is, having beads with the same diameter, and the corresponding bead support seats located at the sides of the external peripheral crown of the rim also have the same diameters.

With respect to said toroidal ring, it consists of a generally thin annular-shaped body, comprising a central annular-shaped band made of a metal such as steel, and two identical annular-shaped side bands in an elastically deformable material that is relatively flexible, such as an elastomeric material.

When such tyre (carcass and ring) is associated with its rim, its internal ring is arranged astride of the circumferential channel foreseen on the crown of the rim, with the side elastomeric bands being engaged in the seats of the rim coupled with the carcass beads.

In particular, when the tyre is mounted, each single bead is located between the respective bead locking anchor edge of the rim and the corresponding side elastomeric band of the toroidal ring.

These tyres are mounted practically in the same manner as standard or normal tyres, whereas tyre removal can cause various problems.

This is partly due to the fact that at the present time means suitable for the structure of this type of tyre are not available since all attempts to provide a solution have not yet produced a positive or satisfactory result.

For this reason, the tyre repairer is forced to use preexistent tools, in other words, those designed for standard or normal tyres.

However, given the special nature of RUN FLAT type tyres, and given the fact that the tools available for the tyre repair shops are far from adequate, the removal of such tyres has generally required particularly long, complex, heavy and inconvenient procedures.

Naturally the use of tools that are not especially, or not at all, designed for this type of tyre, also leads to a greater risk in causing considerable damage, as was obeserved in said attempts, to one or more parts of the wheel as a whole (rim and tyre) such as the rim bead support seats, or the "tubeless" type carcass beads, or the internal toroidal ring inside the tyre. A demounting tool for solid tyres is disclosed in DE 39 10807 C1.

Naturally this situation is made even worse in the case of alloy rims, and more so when the rims are painted.

The main aim of the present invention is to provide a tool adapted for the removal of said RUN FLAT type tyres in a particularly easy and practical way, and in the same time lapse required for the removal of standard or normal tyres.

Another aim of the present invention is to create a tool that is adapted to operate in the aforementioned manner while respecting the intactness of the rim and tyre (external carcass + internal ring).

A further aim is to provide a tool that is able to achieve all the said objects within the context of a simple, rational, reliable, hardwearing tool, which is light in weight and cost-effective.

Said aims are achieved by means of a tool presenting all the characteristics as described in the main claim.

Preferred and advantageous embodiments of these means are described in the dependent claims.

According to this finding, the tyre remover tool generally comprises a flat bar-type element intended to be inserted between said rim and said tyre, after the tyre beads have been removed from the respective rim bead support seats, to provide a generally smooth continuous slide wall for the extraction of the tyre (external carcass and internal ring) from the rim. In more detail, the tyre remover tool comprises a generally thin flat rigid element that has a curved shape corresponding to the external shape of the rim, and it is intended, once the respective tyre (carcass + ring) bead has been removed, to be inserted between the tyre and the rim in order to create a bridge that crosses over the circumferential channel of the rim, thus connecting the external circumferential edge of the bead locking anchor edge where said element is inserted, with the bead support seat which is located at a certain distance from the said edge.

According to one variant of the finding, said curved element has a preferably humpbacked shape, wherein the longer curved edge has an inner diameter almost equal to the diameter of the bead support seat of the rim and wherein the shorter curved edge has an inner diameter almost equal to the diameter of the bead support seat of the same rim.

The characteristics and the constructive advantages of the finding, as well as its employment methods will be made clear by the detailed description below, in reference to the figures in the appended drawings which illustrate a particular and preferred embodiment in a purely illustrative and by no means limitative manner.

Figure 1 is a plane view of a tyre remover tool according to this finding.

Figure 2 is an enlarged detail in scale of the section II-II shown in figure 1.

Figure 3 is the view seen from the direction III shown in figure 1.

Figure 4 shows a partial cross-section of a straight wheel mounted with a RUN FLAT type tyre.

Figure 5 is a view, similar to that in figure 4, showing the internal ring of the tyre.

Figure 6 is a plan view of the wheel in figure 4 blocked on a tyre remover, and arranged in a position for tyre removal.

Figure 7 is an enlarged view of the section VII-VII in figure 6.

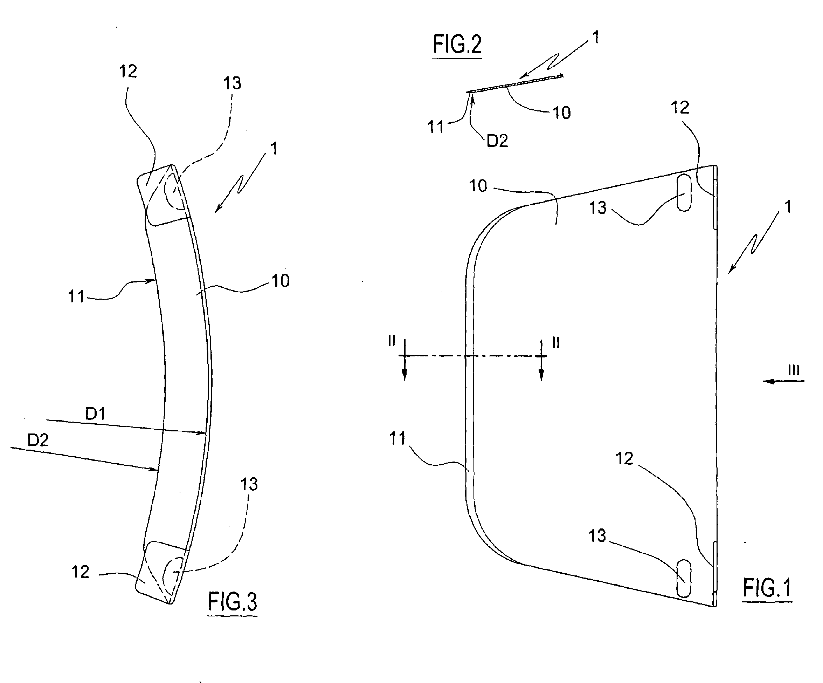

The appended drawings show a tyre remover tool, identified throughout by the reference numeral 1, and illustrated completely in figures 1 to 3, said tool being typically intended for the removal of RUN FLAT type tyres, as stated in the introduction.

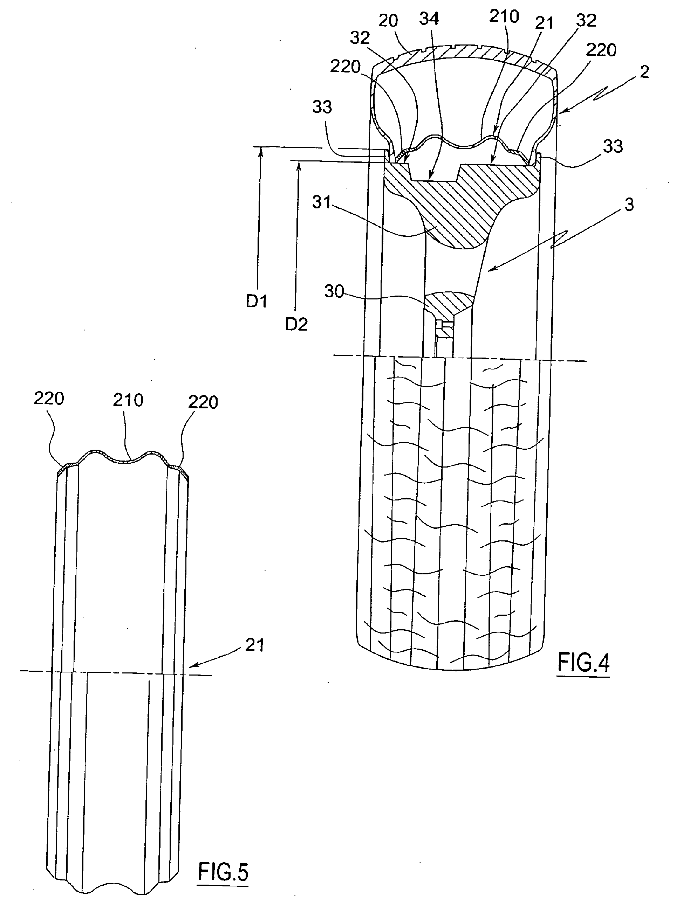

The elements that compose this type of tyre, identified throughout by the numeral 2, are illustrated completely in figures 4 and 5. In particular, figure 4 shows the tyre mounted on its respective rim 3. The total structure of the rim 3 is basically a standard type, and is generally composed of a central disk 30 to be fixed to the vehicle, and an external peripheral crown 31 designed to receive the aforesaid tyre 2.

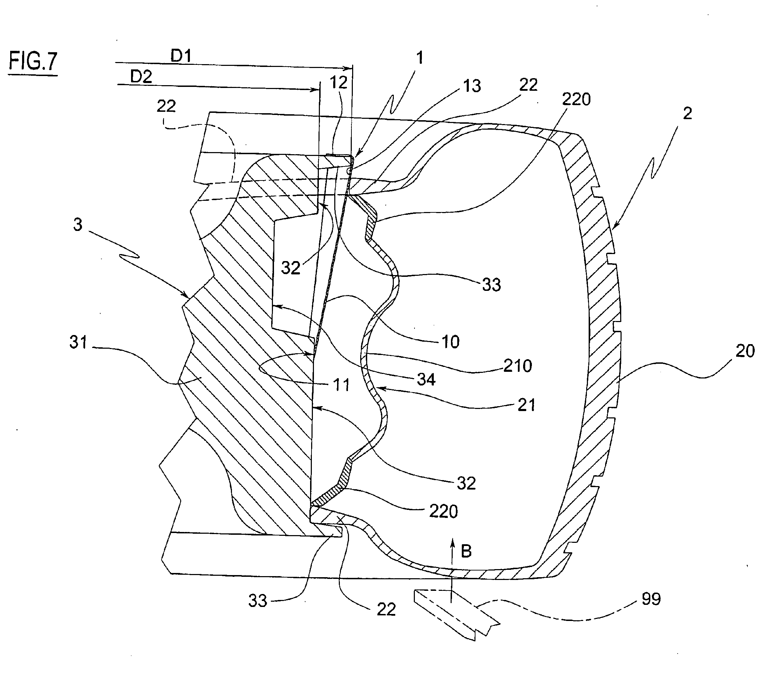

On the external surface of the crown 31 are two opposing side bead support seats 32, which are bordered by the respective bead locking anchor edges 33, and which are shaped inwards to meet a circumferential channel 34. Said seats 32 have the same diameter (refer to figures 5 and 7).

In figures 4, 6, and 7, the diameters of said seats 32 and said edges 33 have been identified with the numerals D2 and D1 respectively, the reason for this will be made clear further on.

Tyre 2 is composed of an external carcass 20 and an internal composite elastically deformable toroidal ring 21. The carcass 20 is symmetrical, in that it has two beads 22 of identical shape and size, and in particular, having the same diameter, adapted to couple with the aforesaid bead support seats of rim 3.

Like the carcass 20, the toroidal ring 21 is also symmetrical, having an overall rounded profile towards the exterior (figure 5) and comprising a central annular band 210 and two identical side annular bands 220.

When seen in a cross-section, the central band 210 has an undulated shape, while the side bands 220 (refer to figures 4, 5, and 7) have an obtuse angled form.

Said central band 210 is composed of a relatively resistant elastic material, such as harmonious steel, and said side bands 220 are composed of an elastic material less resistant than the former material, such as an elastomeric material.

When the tyre 2 is mounted that is in a position ready for use, the side bands 220 are coupled with the bead support seats 32 of rim 3, where the external walls are supported against the internal sides of the beads 22 of the carcass 20 (figure 4).

No problems are involved in the mounting of the tyre 2, which is performed as follows, supposing that the tyre is positioned as shown in figure 5. It should be noted that the position can be inverted, in other words, with the channel 34 in the under position, even though the position shown in the figure is preferable for easier and more correct insertion and positioning of the tool 1, which will be described further on. Firstly, (using methods known to the art) the lower bead 22 of carcass 20 is inserted on rim 1, then the ring 21 is inserted into carcass 20 and onto rim 1, after which, the upper bead 22 is inserted. The following tyre inflation completes the operation, and the total tyre results as shown in figure 4.

To remove the tyre, tool 1 is used according to the finding and illustrated in the figures 1 to 3. This tool comprises a relatively thin rigid shaped element 10, having a constant thickness, a smooth surface, and with all corners and edges suitably joined and/or chamfered.

Said element 10 can be produced from a flat metal sheet for example, having the form of an isosceles trapezoid, that is later curved as seen in figure 3, according to the directrix established by the parallel sides of said isosceles trapezoid form.

More particularly, element 10 has a shape that is basically hump-backed, or in other words, has the shape of the section of a conical surface. (figures 1 and 2).

According to the teachings of the finding, the longer curved side of said semi-conical element has a diameter practically equal to the external diameter D1 of the bead lock edge 33, or gutter, of the rim 3, and the shorter curved edge of the same semi-conical element has a diameter that is practically equal to D2 of the bead support seats 32 of the same rim 3. With reference to the length of said cone-shape (or the height of the said isosceles trapezoid form), this is generally at least slightly greater than the the distance that exists between the external side of a bead locking anchor edge 33, or gutter, on rim 3 and the side of the channel 34 which is located at a distance further from the said bead locking anchor edge 33. In particular, and in relation to a rim with established specifications, such as its nominal diameter for example, said length of said cone shape will preferably be chosen in relation to the bead lock edge that is closest to channel 34 as shown in figure 7.

Furthermore, the angle at the vertex where the slanting straight edges of said cone shape meet, may be between 20 and 100°, preferably between 30 and 60°, and in the case shown in the figure, the angle is approximately 40°.

As well as the details described above, in its concave area, element 10 also comprises a flattened strip 11 that runs along the whole length of the internal margin of the shorter curved edge of said semi-cone form, and two lugs 12 that extend from the opposite ends of the longer curved edge of said semi-cone.

In particular, this flattened strip 11 is arranged in a direction so that it associates with the bead support seat 32 when the tool is in its work position (figure 7). Lastly, two protruding juts 13 are positioned opposite said lugs 12, dimensioned and shaped so that they create, with said lugs 12, two insertion seats attached bilaterally to the external peripheral portion of the bead locking anchor edge 33 (Refer to figure 7).

The tyre remover tool 1 described above is basically used as follows.

After the beads 22 have been removed, the complete wheel (rim 3 + carcass 20 + ring 21) is placed on a tyre remover machine of a type known to the art, but not illustrated here for simplicity.

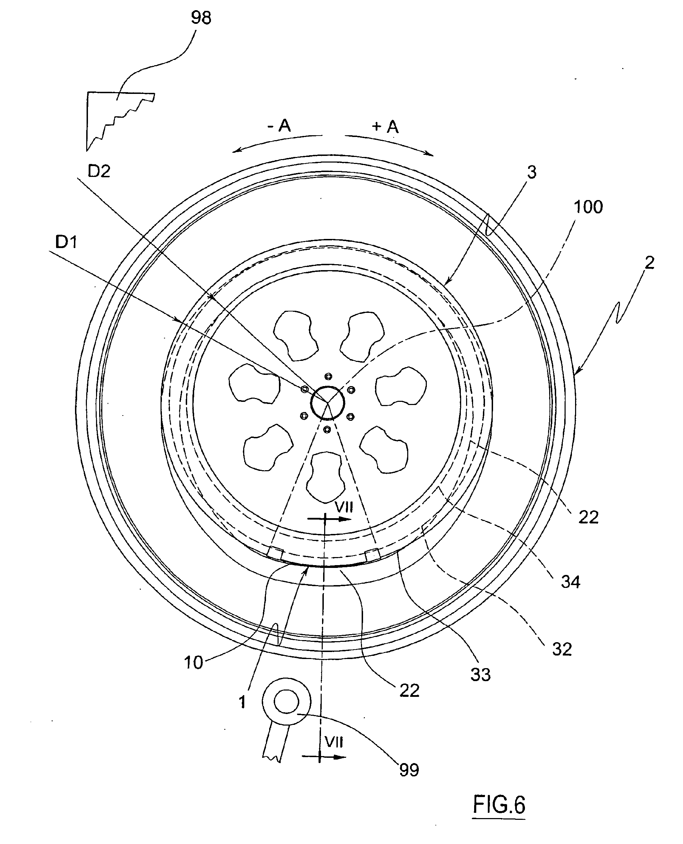

Figure 6 shows a part (on the top left hand side) of its base 98, which is mounted with a standard self-centering unit, in this case, having a vertical axis 100.

The same figure 6 shows a standard disk type bead remover 99, that can be installed or not on the tyre remover machine as required.

Once the rim 3 has been blocked on the self-centering unit with channel 34 on top as shown in figure 7, and the upper bead 22 of tyre 2 has been removed from its seat 32, the operator presses one part of the upper wall of the carcass 20 for access to the corresponding section of the upper bead 22 (curved dotted line on top left hand side in figure 7) opposite channel 34.

The operator maintains the said upper wall pressed down (with simultaneous corresponding deformation of the underlying ring 21), then pushes said wall towards the machine axis 100, so that a portion of the upper bead 22 facing channel 34 is inserted into the channel, and correspondingly, the portion diametrically opposite moves away from its seat 32 together with the underlying portion of ring 21 (Figures 6 and 7).

In this manner sufficient space is created between rim 3 and tyre 2 (carcass 20 + ring 21) for the insertion of the tool 1 (Figure 7).

The tool 1 is inserted through said space as shown in figures 6 and 7, in other words, with the narrowest part facing downwards and the concave side facing the centre of the rim 3.

When the tool has been inserted, the flattened strip 11 of the tool 1 is on a level with the lower bead support seat 32, and the attachment seats formed by the lugs 12 and juts 13 are engaged with the upper bead locking anchor edge 33.

Practically speaking, once the tool 1 is placed in position, it passes over a corresponding section of the channel 34, behind it. The tool 1, upper bead seat 32, upper bead locking anchor edge 33 and upper bead 22 are suitably lubricated, then the bead remover disk 99 is positioned under the lower side of the carcass 20 (figure 7). At this point the operator activates the rising action of the bead removal disk 99 (Arrow B shown in figure 7), and this controls the alternating rotation of the self-centering unit in both opposite directions (arrow +A and -A shown in figure 6) for angles smaller than 160°, such as 120° each for example. The combined movement of disk 99 and the self-centering unit provoke a gradual sliding off action of the tyre from the rim 3, in particular, the section of the tyre located at the level of tool 1 moves along the slide which has been formed by the tool, and which connects the upper bead locking anchor edge 33 to the lower bead support seat 32 forming a type of bridge. Naturally during the sliding action, the operator's intervention is reduced to essential operations only.

The benefits and advantages to be gained by the finding are easily understood by examination of the appended figures. As explained previously, the tyre remover tool 1 described herein, is dedicated to the specific rim 3 shown. In other words, the first tool 1 is dimensioned and shaped in order to operate in the most efficient manner on rim 3.

Consequently, when equipping a tyre removal machine (previously existent or not) in order to operate in the most efficient manner on all types of tyre rims on the market which are suited for mounting RUN FLAT type tyres, it would be appropriate to equip the machine with the same number of tyre removers, or at least a range of three for example, each one being obviously intended for a specific range of rims according to dimension or form, such as the nominal diameter for example.

This aspect concerning the supply of tyre remover tool sets is included within the scope of protection of the finding.

## Claims

1. Tool (1) for the removal of *run flat* type tyres comprising an external "tubeless" type carcass (20) equipped with two beads (22) having the same diameter, and a separate internal toroidal ring, generally of a thin elastically deformable material (21), said tyre being intended to be associated with a respective rim (3) bearing two side seats for attaching said beads, wherein said beads are inserted between gutters (33) of said seats and the lateral sides of said toroidal ring, **characterised in that** it comprises a generally rigid element in sheet material (10) having a curved form similar corresponding to the external profile of the rim, and after bead removal from the tyre, intended to be inserted between the tyre and the respective rim in order to provide a sliding surface for the tyre, said surface connecting the external circumferential end of the gutter at the position where said element is inserted to form a type of bridge with the rim surface located axially outwardly from the distantly side of the rim well (34).

2. Tool according to claim 1 **characterised in that** said element has the shape of the section of a conical surface wherein the longer curved edge has an internal diameter practically equal to the external diameter of the bead locking anchor edge of the rim, and wherein the shorter curved edge has an internal diameter practically equal to the diameter of the bead seats of the same rim.

3. Tool according to claim 2 **characterised in that** said longer curved edge of said section of a conical surface is completely equipped internally with a seat to associate in a bilateral manner with the external peripheral margin of the said bead locking anchor edge.

4. Tool according to claim 2 **characterised in that** said shorter curved edge of said section of a conical surface is completely equipped internally with a flattened strip adapted to associate with said bead support seat.

5. Tool according to claim 2 **characterised in that** the angle at the vertex formed by the straight sides of said section of a conical surface is between 20 and 110°.

6. Tool according to claim 2 **characterised in that** said angle at the vertex has a value between 30 and 60°, typically 40°.

7. Tool according to claim 2 **characterised in that** all edges and/or corners of said section of a conical surface not belonging to the said flattened strip are all suitably joined and/or chamfered.

8. Set of tools to be used on tyre remover machines during the removal of *run flat* type tyres **characterised in that** it comprises at least two tyre remover tools, each one being individually in accordance with any one of the previous claims, and individually constructed to adapt with sufficient precision to the characteristics of size and/or shape of at least one group of the range of rims for *run flat* or similar type tyres on the market.

## Patentansprüche

1. Demontagewerkzeug (1) für Run-Flat-Reifen (RFT) mit externer, "schlauchfreier" Karkasse (20) mit zwei Wulsten (22) gleichen Durchmessers und einem separaten inneren Stützring, in der Regel aus einem dünnen, elastischen, verformbaren Material (21). Der Reifen ist mit einer Felge (3) ausgestattet, die zwei seitliche Wulstsitze zum Einhängen der Reifenwulste trägt und in welche diese Wulste zwischen die Stege (33) der Wulstsitze und die Seiten des Stützrings eingehängt werden. Der Stützring enthält einen allgemein festen Bestandteil aus dünnwandigem Material (10), der entsprechend des externen Felgenprofils gewölbt ist und nach dem Entfernen der Wulste zwischen den Reifen und die entsprechende Felge eingefügt wird, um eine verschiebbare Oberfläche am Reifen zu erhalten. Diese Oberfläche verbindet das äußere Umfangsende des Steges an der Stelle, wo der feste Bestandteil eingefügt wird, nach Art einer Brücke mit der Felgenoberfläche auf der von der axial nach außen entfernten Seite des Felgenbettes (34).

2. Werkzeug nach Anspruch 1, **dadurch gekennzeichnet, dass** der feste Bestandteil die Form eines konischen Oberflächenabschnitts hat, wobei die Wölbungsaußenseite einen inneren Durchmesser aufweist, der dem äußeren Durchmesser der Felgenseite mit dem Wulstrückhalteflansch praktisch gleich ist und die Wölbungsinnenseite einen inneren Durchmesser aufweist, der dem Durchmesser der Wulstsitze an der Felge praktisch gleich ist.

3. Werkzeug nach Anspruch 2, **dadurch gekennzeichnet, dass** die Wölbungsaußenseite des konischen Oberflächenabschnitts innen vollständig ausgestattet ist mit einem Wulstsitz, der in beide Richtungen wirkend mit dem äußeren umlaufenden Rand der Felgenseite mit dem Wulstrückhalteflansch verbunden wird.

4. Werkzeug nach Anspruch 2, **dadurch gekennzeichnet, dass** die Wölbungsinnenseite des konischen Oberflächenabschnitts innen vollständig ausgestattet ist mit einem abgeflachten, an den Wulstsitz angepassten Streifen.

5. Werkzeug nach Anspruch 2, **dadurch gekennzeichnet, dass** der Eckwinkel an den geraden Seiten des konischen Oberflächenabschnitts zwischen 20° und 110° liegt.

6. Werkzeug nach Anspruch 2, **dadurch gekennzeichnet, dass** der Eckwinkel einen Wert zwischen 30° und 60°, üblicherweise 40° aufweist.

7. Werkzeug nach Anspruch 2, **dadurch gekennzeichnet, dass** alle Ränder und/oder Ecken des konischen Oberflächenabschnitts, die nicht zu dem abgeflachten Streifen gehören, angemessen verbunden und/oder abgefast sind.

8. Werkzeugset für Reifendemontagemaschinen für RFT-Reifen mit wenigstens zwei Reifendemontagewerkzeugen jeweils in Übereinstimmung mit allen genannten Ansprüchen und so hergestellt, dass sie mit ausreichender Genauigkeit in Größe und/oder Format wenigstens einer auf dem Markt bestehenden Felgenserie für RFT oder ähnliche Reifen angepasst werden können.

## Revendications

1. Outil (1) pour l'extraction des pneus à flancs renforcés comprenant une carcasse externe (20) de type « sans chambre » équipée de deux talons (22) ayant le même diamètre et d'un anneau toroïdal interne séparé, habituellement en matériau (21) fin déformable par élasticité, lesdits pneus s'entendant être associés à une jante (3) correspondante portant deux logements latéraux pour la fixation desdits talons, où lesdits talons sont introduits entre des crochets (33) desdits logements et les côtés latéraux dudit anneau toroïdal, **caractérisé par le fait qu'**il comprend un élément généralement rigide en matériau laminé (10) ayant une forme courbe similaire correspondant au profil extérieur de la jante et devant être introduit, après l'extraction du talon du pneu, entre le pneu et la jante correspondante afin de fournir une surface de glissement au pneu, ladite surface reliant l'extrémité de la circonférence extérieure du crochet à la position où ledit élément est introduit pout former une sorte de pont avec la surface de la jante située à l'extérieur de l'axe par rapport au côté distant du creux de la jante (34).

2. Outil selon la revendication 1 **caractérisé par le fait que** ledit élément possède la forme de la section d'une surface conique, où le bord courbe plus long possède un diamètre interne pratiquement égal au diamètre externe du bord d'ancrage de talon de la jante et où le bord courbe plus court possède un diamètre interne pratiquement égal au diamètre des logements de talon de la même jante.

3. Outil selon la revendication 2 **caractérisé par le fait que** le bord courbe plus long de ladite section d'une surface conique est entièrement doté à l'intérieur d'un logement à associer de manière bilatérale avec le bord externe périphérique dudit bord d'ancrage de talon.

4. Outil selon la revendication 2 **caractérisé par le fait que** dans ledit bord courbe plus court de ladite section d'une surface conique est complètement doté à l'intérieur d'une bande aplatie adaptée pour s'associer avec ledit logement de soutien de talon.

5. Outil selon la revendication 2 **caractérisé par le fait que** l'angle au sommet formé par les côtés droits de ladite section d'une surface conique est compris entre 20 et 110°.

6. Outil selon la revendication 2 **caractérisé par le fait que** l'angle au sommet a une valeur comprise entre 30° et 60°, habituellement de 40°

7. Outil selon la revendication 2 **caractérisé par le fait que** tous les bords et/ou angles de ladite section d'une surface conique n'appartenant pas à ladite bande aplatie sont tous assemblés et/ou chanfreinés de manière appropriée.

8. Jeu d'outils à utiliser sur les machines à extraire les pneus au cours de l'extraction des pneus à flancs renforcés **caractérisé par le fait qu'**il comprend au moins deux outils d'extraction de pneu, chacun étant individuellement conforme à n'importe quelle des revendications précédentes et construit individuellement pour s'adapter avec une précision suffisante aux caractéristiques de taille et/ou de forme d'au moins un groupe de la gamme de jantes pour des pneus à flancs renforcés ou similaires sur le marché.
